# EUROPEAN PATENT APPLICATION

(11) **EP 4 796 284 A1**
(43) Date of publication of application: **26.08.2026**
(21) Application number: 23956143.4
(22) Date of filing: 20.10.2023
(51) Int. Cl.: B29C 45/17, B29C 33/14, B29C 45/14, B29C 45/57, B29L 23/00

(54) **METHOD FOR MANUFACTURING BENT RESIN PIPE AND BENT RESIN PIPE**

(71) Applicant: The Yokohama Rubber Co., Ltd., Hiratsuka-shi, Kanagawa 254-8601 (JP)
(72) Inventor: HOU, Gang, Hiratsuka-shi, Kanagawa 254-8601 (JP); KURIBAYASHI, Nobuaki, Hiratsuka-shi, Kanagawa 254-8601 (JP)
(74) Representative: Grünecker Patent- und Rechtsanwälte PartG mbB
(86) International application number: PCT/JP2023/038063
(87) International publication number: WO 2025/083896

(57) **Abstract**

To provide a method for manufacturing a bent resin pipe that suppresses variation in wall thickness of a pipe wall over the entire pipe length even when the pipe length is long, and to provide the bent resin pipe. When manufacturing a bent resin pipe (1) having a pipe length of 350 mm or more, molten resin (R1) is injected by an injector (7) from one end portion (13a) toward the other end portion (13b) of a cavity (13) that includes a bent portion (13c) and extends in a mold (12), a gas is injected as an assist material As from the other end portion (13b) toward the one end portion (13a) of the cavity (13) at a predetermined injection pressure, and an excess of the molten resin (R1) is discharged from the cavity (13), whereby the bent resin pipe (1) composed of a cured resin (R2) obtained by curing the molten resin (R1) having a cylindrical shape left in the cavity (13) is manufactured.

## Description

### Technical Field

The present invention relates to a method for manufacturing a bent resin pipe and the bent resin pipe, and more particularly, to a method for manufacturing a bent resin pipe in which variation in wall thickness of a pipe wall over the entire pipe length is suppressed even when the pipe length is long, and the bent resin pipe.

### Background Art

A method for manufacturing a bent resin pipe has been proposed, in which a cavity that bends and extends in a mold is filled with molten resin, and then a core is passed through the cavity to form and cure a hollow body made of the molten resin (for example, see Patent Documents 1 and 2). In the method proposed in these documents, a solid core made of metal, resin, or the like, is used.

In the course of the core passing through the cavity filled with the molten resin, the temperature of the molten resin which is in contact with the core (particularly, a metal core) tends to decrease rapidly. In the case of the core made of resin, the molten resin is likely to adhere to the surface of the core. Therefore, when the core is passed through when the cavity is filled with the molten resin having a long pipe length and a bent portion, a significant difference occurs in the wall thickness of a pipe wall of a formed hollow body between the region corresponding to the entrance side of the core and the region corresponding to the outlet side of the core, and this difference increases as the pipe length increases. The difference in the wall thickness of the pipe wall at the bent portion also increases depending on the degree of bending of the bent portion. As a result, in the manufactured bent resin pipe, the variation in the wall thickness of the pipe wall over the entire pipe length becomes large. Therefore, there is room for improvement in suppressing variation in the wall thickness of the pipe wall when manufacturing the bent resin pipe having a long pipe length.

### Citation List

### Patent Literature

Patent Document 1: JP 2021-49644 A
Patent Document 2: JP 2021-88088 A

### Summary of Invention

### Technical Problem

An object of the present invention is to provide a method for manufacturing a bent resin pipe in which a variation in wall thickness of a pipe wall over the entire pipe length is suppressed even when the pipe length is long, and to provide the bent resin pipe.

### Solution to Problem

In order to achieve the above object, a method for manufacturing a bent resin pipe according to an embodiment of the present invention includes injecting a molten resin by an injector from one end portion toward the other end portion of a cavity that bends and extends in a mold, injecting an assist material into the cavity and discharging an excess of the molten resin from the cavity, and curing the molten resin having a cylindrical shape left in the cavity, thereby manufacturing the bent resin pipe, the bent resin pipe having a pipe length of 350 mm or more, and a gas being used as the assist material.

A bent resin pipe according to an embodiment of the present invention has a pipe length of 350 mm or more includes a connection base portion for connecting an accessory device at a longitudinally intermediate position of the bent resin pipe, the connection base portion protruding outward from an outer pipe surface and having a communication hole communicating with a pipe passage, the bent resin pipe and the connection base portion being an integral body made of an identical resin, an average wall thickness of a pipe wall of the bent resin pipe being 1.5 mm or more and 1.75 mm or less, and a variation in wall thickness of the pipe wall over an entire length of the pipe being 0.25 mm or less.

### Advantageous Effects of Invention

In the method for manufacturing the bent resin pipe of the embodiment of the present invention, a gas is used as the assist material when manufacturing a bent resin pipe having a pipe length of 350 mm or more. Using a gas as the assist material suppresses the temperature of the molten resin which is in contact with the assist material in the course of the assist material passing through the cavity filled with the molten resin, as compared with the case in which a solid core is used, and avoids adhesion of the molten resin to the assist material. As a result, this is advantageous in suppressing the variation in the wall thickness of the pipe wall over the entire length of the pipe, even when the bent resin pipe has a pipe length of 350 mm or more.

By using this method for manufacturing the bent resin pipe, the bent resin pipe having a pipe length of 350 mm or more, including a connection base portion for connecting an accessory device at a longitudinally intermediate position of the bent pipe, in which the connection base portion protrudes outward from an outer pipe surface, and including a communication hole communicating with a pipe passage, can be manufactured, and the bent resin pipe and the connection base portion are formed as an integral body made of the same resin. An average wall thickness of the pipe wall of the bent resin pipe can be set to 1. 5 mm or more and 1. 75 mm or less, and the variation in the wall thickness of the pipe wall over the entire length of the pipe can be set to 0.25 mm or less.

### Brief Description of Drawings

FIG. 1 is an explanatory diagram illustrating an embodiment of a bent resin pipe in a plan view.
FIG. 2 is an explanatory diagram illustrating the bent resin pipe of FIG. 1 in a front view (viewed along arrow A).
FIG. 3 is an explanatory diagram illustrating the bent resin pipe of FIG. 1 in a side view (viewed along arrow B).
FIG. 4 is an explanatory diagram illustrating the bent resin pipe of FIG. 1 in a cross-sectional view (cross-sectional view along C-C).
FIG. 5 is an explanatory diagram illustrating the bent resin pipe of FIG. 1 in a longitudinal cross-sectional view.
FIG. 6 is an explanatory diagram illustrating a manufacturing device for the bent resin pipe of FIG. 1.
FIG. 7 is an explanatory diagram illustrating one (lower) portion of the mold of FIG. 6 in a partially enlarged plan view.
FIG. 8 is an explanatory diagram illustrating a state in which a metal member is disposed at a forming portion provided adjacent to the cavity of FIG. 7.
FIG. 9 is an explanatory diagram illustrating in a cross-sectional view a state in which the mold of FIG. 8 is clamped.
FIG. 10 is an explanatory diagram illustrating a state in which molten resin is injected to fill the cavity of FIG. 9.
FIG. 11 is an explanatory diagram illustrating a state of injecting an assist material into the cavity filled with the molten resin of FIG. 10.
FIG. 12 is an explanatory diagram illustrating a state in which the molten resin left in the cavity of FIG. 11 is cured.

### Description of Embodiments

A method for manufacturing a bent resin pipe and a bent resin pipe of the present invention will be described below by referring to an embodiment illustrated in the diagrams.

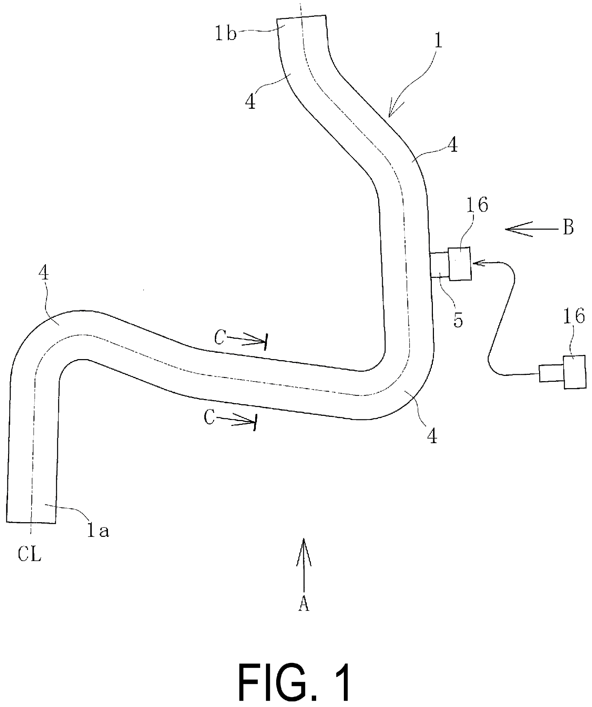

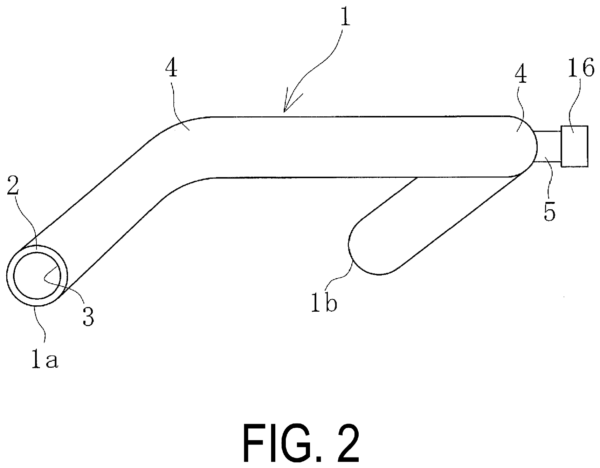

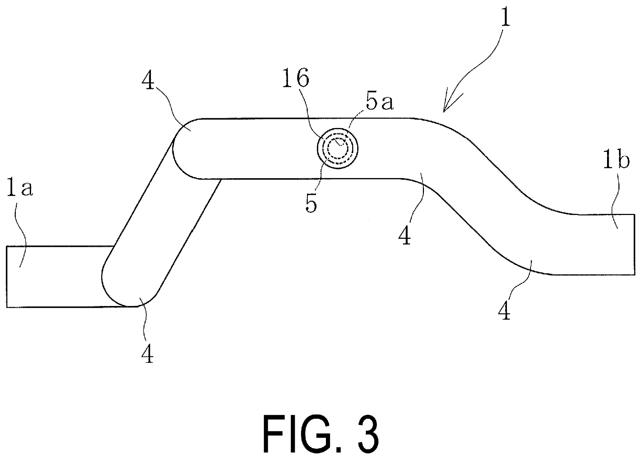

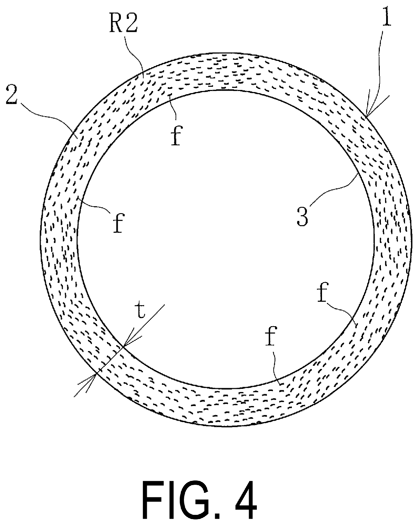

An embodiment of a bent resin pipe 1 (hereinafter referred to as a resin pipe 1) illustrated in FIGS. 1 to 5 is a cylindrical body having a pipe wall 2 made of cured resin R2, and a pipe passage 3 extending in a longitudinal direction. The resin pipe 1 has a bent portion 4 at one or a plurality of positions and has a pipe length of 350 mm or more. In this embodiment, the resin pipe 1 is bent in a plan view and is also bent in a front view (side view), thus having a three-dimensionally bent shape.

For example, the pipe length of the resin pipe 1 is, for example, 750 mm or more or 1000 mm or more. The upper limit of the pipe length of the resin pipe 1 is, for example, 2500 mm or 2000 mm. An inner diameter of the resin pipe 1 is, for example, 4 mm or more and 16 mm or less, and is set to a substantially fixed value over the entire length of the pipe. A dot-dash line CL in the diagrams indicates a center line passing through the center in a transverse cross-section of the resin pipe 1 (pipe passage 3). The pipe length of the resin pipe 1 is a length from one end to the other end of the center line CL in the longitudinal direction of the pipe passage 3.

The resin pipe 1 is used as a pipe of an air conditioner mounted on a vehicle such as an automobile. The resin pipe 1 installed in such a confined space assumes a three-dimensionally complex, curved shape.

The resin pipe 1 has a connection base portion 5 for connecting an accessory device such as a sensor valve at a longitudinally intermediate position of the resin pipe 1, and the connection base portion 5 protrudes outward from the outer surface of the resin pipe 1. The resin pipe 1 may have the connection base portion 5 at multiple longitudinally intermediate positions, not limited to one position. The connection base portion 5 has a communication hole 5a communicating with the pipe passage 3. The resin pipe 1 and the connection base portion 5 are formed as an integral body made of the same resin.

As a resin forming the resin pipe 1, an appropriate type of resin is selected from various known thermoplastic resins that can be injected based on the required performance and the like for the resin pipe 1. For example, in a case of manufacturing the resin pipe 1 for the air conditioner mounted on automobiles, polyamide, polypropylene, ABS resin, or the like is used, and a nylon resin (nylon 6, nylon 66, nylon 12, nylon 11), polyethylene, polycarbonate, polystyrene, polyoxymethylene, polymethylmethacrylate polybutylene terephthalate, acryl, polyether ether ketone, thermoplastic polyurethane, polyethylene terephthalate, or polyvinyl chloride is suitable.

The resin pipe 1 may be made solely from a thermoplastic resin, or may be configured to include various types of fibers (e.g., a glass fiber or carbon fiber material of either short fibers or long fibers) as reinforcing fibers f mixed in a predetermined ratio (e.g., 30% parts by mass or more and 40% parts by mass or less per 100 parts by mass of resin). In the case of short fibers as the reinforcing fibers f, its size is, for example, an outer diameter of 0.001 mm or more and 1.0 mm or less, and a length of 0.01 mm or more and 10 mm or less. In this embodiment, the reinforcing fibers f are mixed in the cured resin R2.

An average wall thickness Ta of the pipe wall 2 of the resin pipe 1 is 1. 5 mm or more and 1. 75 mm or less. A variation V in the wall thickness t of the pipe wall 2 over the entire pipe length is 0. 25 mm or less.

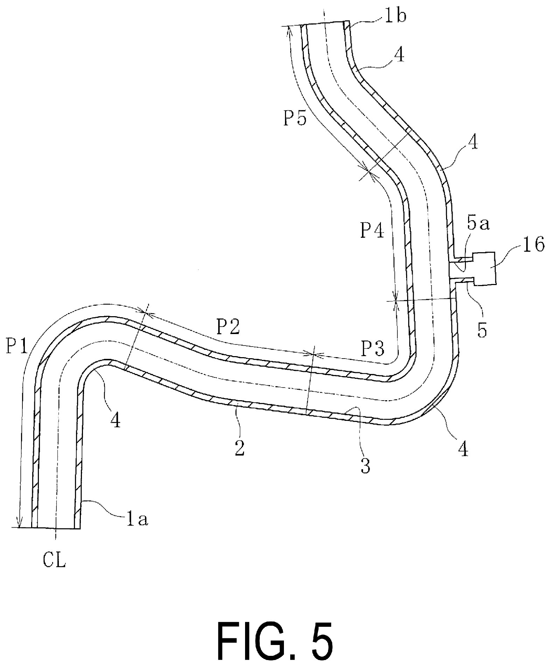

The average wall thickness Ta of the pipe wall 2 is defined as follows. As illustrated in FIG. 5, the resin pipe 1 is divided longitudinally into five equal parts, and the wall thickness t of the pipe wall 2 is measured at the longitudinal center position in the cross-section for each of the five divided regions P1, P2, P3, P4, and P5. The wall thickness t is measured in the regions P1 to P5 at positions having the same inner diameter, excluding the portion corresponding to the connection base portion 5. When the connection base portion 5 is present at the longitudinal center position of that region, the wall thickness t is measured at the cross-section closest to the longitudinal center position of that region, excluding the portion corresponding to the connection base portion 5. Then, the maximum value tₘₐₓ and the minimum value tₘᵢₙ of the wall thickness t in the cross-section are determined. A simple average value of the maximum value tₘₐₓ and the minimum value tₘᵢₙ determined in each region P is calculated, and this simple average value is the wall thickness T of the pipe wall 2 in that region P (T = (tₘₐₓ + tₘᵢₙ₎/2). For example, the simple average value of the maximum value tₘₐₓ and the minimum value tₘᵢₙ of the wall thickness t determined in the cross-section at the longitudinal center position of the region P1 is a wall thickness T1 in the region P1. Similarly, the wall thicknesses T2, T3, T4, and T5 in the regions P2, P3, P4, and P5, respectively, are calculated. Subsequently, a simple average value of the wall thicknesses T1 to T5 of the regions P1 to P5 is calculated, and this simple average value is the average wall thickness Ta of the resin pipe 1 (Ta = (T1 + T2 + T3 + T4 + T5)/5).

The variation V in the wall thickness t of the pipe wall 2 over the entire pipe length is defined as follows. The maximum value Tmax is selected among the maximum values tₘₐₓ of the respective regions P1 to P5, and the minimum value Tmin is selected among the minimum values tₘᵢₙ of the respective regions P1 to P5. A magnitude of the difference between the maximum value Tmax and the minimum value Tmin is the variation V (V = Tmax - Tmin).

Next, an example of a procedure for manufacturing the resin pipe 1 by the method for manufacturing the bent resin pipe of the embodiment of the present invention will be described.

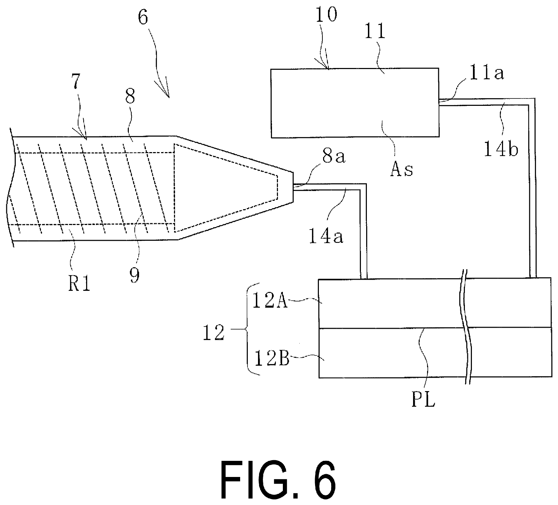

The resin pipe 1 is manufactured using a manufacturing device 6 illustrated in FIGS. 6 to 9. The manufacturing device 6 includes an injector 7, an assist material inflation device 10, and a mold 12. This embodiment uses the mold 12 that consists of a pair of upper and lower molds.

The injector 7 includes a cylinder 8 and a screw 9 provided inside the cylinder 8. The injector 7 is not limited to the type illustrated in the diagram, and various known resin injection molding devices such as a pre-plasticizing type can be used. An injection path 14a is connected to an injection outlet 8a at the tip of the cylinder 8. The injection path 14a is connected to the mold 12. The resin used is heated inside the cylinder 8 and becomes the molten resin R1, and the molten resin R1 is then injected by the screw 9 which is rotating through the injection outlet 8a into the inner portion of the mold 12.

The assist material inflation device 10 has a storage portion 11 in which a gas used as the assist material As is stored. Various known types of inflation devices can be used as the assist material inflation device 10. As the assist material As, a gas such as nitrogen gas or air is used.

An injection path 14b is connected to an injection outlet 11a at the tip of the storage portion 11. The injection path 14b is connected to the mold 12. The gas As is injected from the injection outlet 11a toward the inner portion of the mold 12 at a predetermined pressure. In general, the gas As at room temperature (20°C ± 15°C) is injected.

The mold 12 consists of one mold 12A and the other mold 12B which are assembled together. The molds 12A and 12B abut and separate along a parting line PL as the boundary. The mold 12 is not limited to a two-piece type mold 12, and various other known types of molds 12 may also be employed.

The mold 12 has a cavity 13 formed therein. The cavity 13 extends from one end portion 13a to the other end portion 13b and has a bent portion 13c at an intermediate point. The outer shape of the cavity 13 is the same as that of the resin pipe 1 being manufactured. The one end portion 13a, the other end portion 13b, and the bent portion 13c of the cavity 13 correspond respectively to the one end portion 1a, the other end portion 1b, and the bent portion 4 of the resin pipe 1.

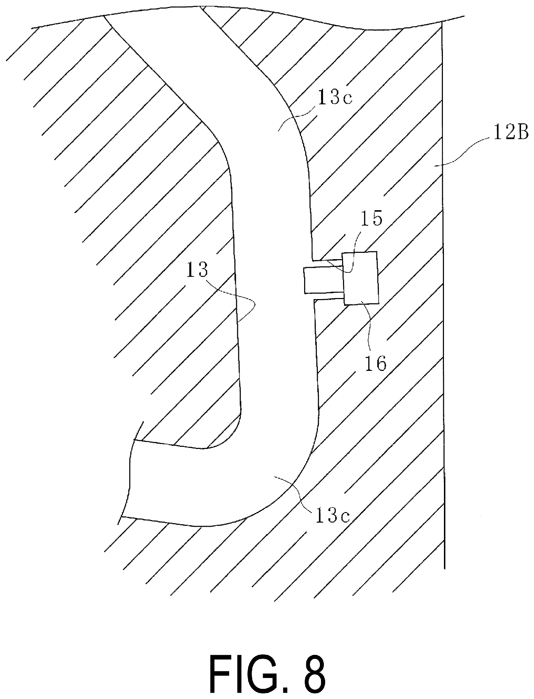

Furthermore, a forming portion 15 is provided adjacent to a longitudinally intermediate position of the cavity 13. The forming portion 15 is a hollow for forming the external shape of the connection base portion 5, constituting a part of the cavity 13 and formed at a position corresponding to the connection base portion 5. A metal member 16 to be attached to the connection base portion 5 is placed in the forming portion 15. As illustrated in FIG. 8, a space (cylindrical space) is formed between the forming portion 15 and the metal member 16.

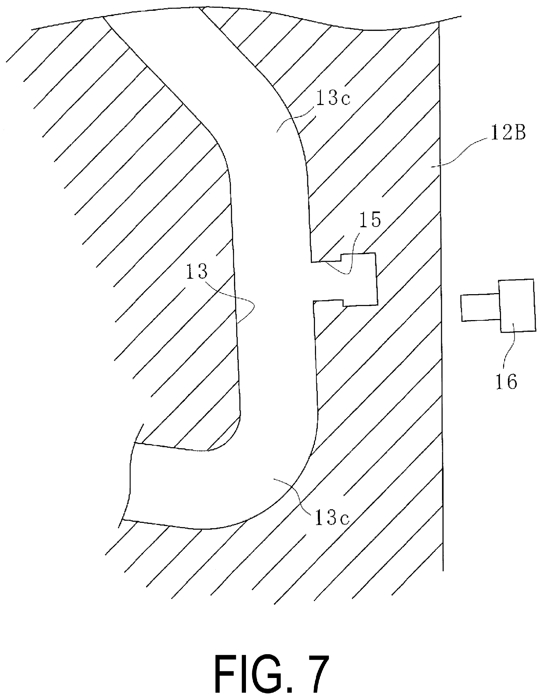

The metal member 16 is, for example, a valve such as a sensor valve or a charge valve, but is not limited thereto, and may be various components attached to the resin pipe 1 (connection base portion 5). Although FIGS. 7 and 8 illustrate one (lower) mold 12B of the pair of upper and lower molds 12, the other (upper) mold 12A also has the cavity 13 and the forming portion 15 having the same shapes as those of the one mold 12B.

The one end portion 13a of the cavity 13 is connected to the injection outlet 8a via the injection path 14a, and the other end portion 13b is connected to the injection outlet 11a via the injection path 14b. The injection outlet 8a may be connected indirectly or directly to the one end portion 13a of the cavity 13, and the injection outlet 11a may be connected indirectly or directly to the other end portion 13b of the cavity 13.

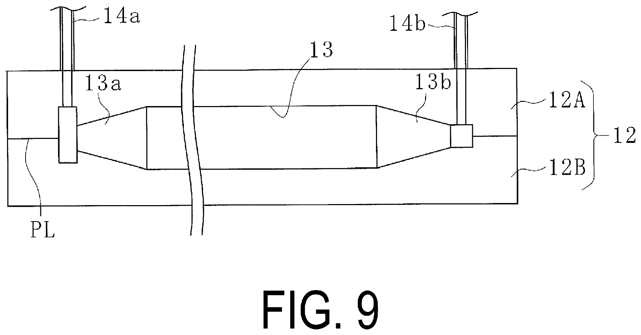

When manufacturing the resin pipe 1, the mold 12 is opened, and the metal member 16 is disposed in the forming portion 15 as illustrated in FIG. 8. Subsequently, as illustrated in FIG. 9, the mold 12A and the mold 12B are assembled together to close the mold.

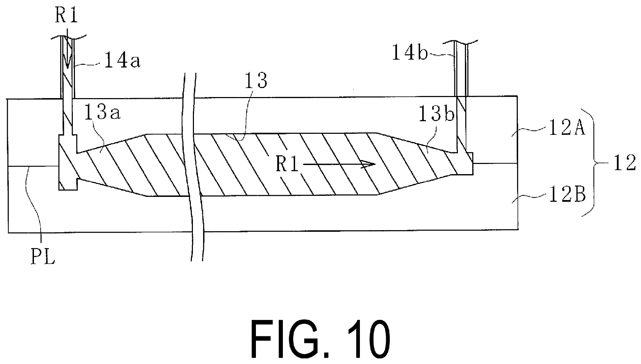

Subsequently, as illustrated in FIG. 10, the molten resin R1 is injected into the cavity 13 of the clamped mold 12 by the injector 7. In this embodiment, the molten resin R1 mixed with the reinforcing fibers f is injected from the injector 7. The injected molten resin R1 is injected from the injection outlet 8a to the inner portion of the cavity 13 via the injection path 14a.

Specifically, the molten resin R1 is injected from the one end portion 13a toward the other end portion 13b of the cavity 13 to achieve a state in which the cavity 13 is filled with the molten resin R1. In the forming portion 15, a cylindrical space between the forming portion 15 and the metal member 16 is filled with the molten resin R1. Note that in FIGS. 10 to 12, the reinforcing fibers f mixed in the molten resin R1 are not illustrated.

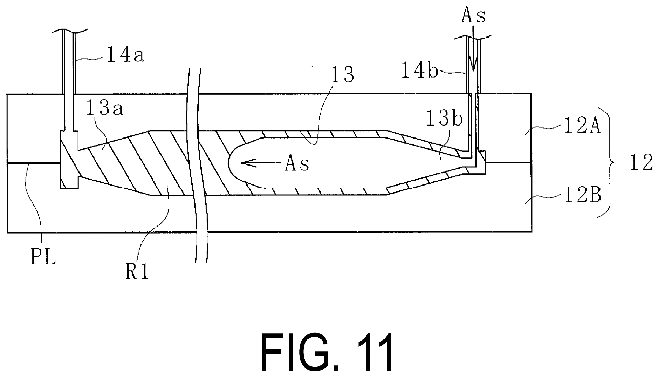

Subsequently, as illustrated in FIG. 11, the assist material (gas) As is injected into the inner portion of the mold 12 by the assist material inflation device 10. That is, the gas As is injected at a predetermined pressure from the other end portion 13b toward the one end portion 13a of the cavity 13 filled with the molten resin R1. The injected gas As passes through the inner portion of the cavity 13 along the extending direction of the cavity 13.

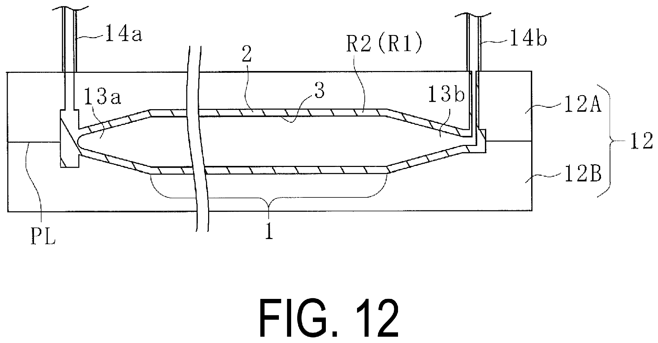

By letting the gas As pass through the inner portion of the cavity 13, an excess of the molten resin R1 is discharged from the one end portion 13a of the cavity 13, and the molten resin R1 is left in the cavity 13 in a cylindrical shape. Since a discharge path which is not illustrated is provided adjacent to the one end portion 13a of the cavity 13, the excess of the molten resin R1 is discharged to the discharge path. As illustrated in FIG. 12, the molten resin R1 left is cured inside the cavity 13 into cured resin R2, thereby forming the resin pipe 1. That is, the portion of the cured resin 2 becomes the pipe wall 2, and the hollow portion becomes the pipe passage 3. At this stage, the waste portions of the cured resin R2 (portions not forming the resin pipe 1) extend and are integrated at both end portions of the resin pipe 1.

In the forming portion 15, the molten resin R1 provided to fill the space (cylindrical space) between the forming portion 15 and the metal member 16 is left and becomes the cured resin R2. Therefore, the cured resin R2 forms the connection base portion 5 having a cylindrical shape in the forming portion 15. As a result, the resin pipe 1 and the connection base portion 15 become an integral body made of the same cured resin R2.

In the forming portion 15, the portion at which the metal member 16 is present becomes the communication hole 5a communicating with the pipe passage 3. Therefore, in this embodiment, the metal member 16 is fixed to the connection base portion 5 with the lower end portion of the metal member 16 internally fitted in the communication hole 5a of the connection base portion 5. Note that the resin pipe 1 can also be formed by disposing an inner ring having the same shape as the metal member 16 in the forming portion 15 instead of the metal member 16. In this case, when the inner ring is removed from the connection base portion 5 of the formed resin pipe 1, the portion from which the inner ring has been removed becomes the communication hole 5a. By inserting the lower end portion of the metal member 16 into this communication hole 5a and internally fitting it, the metal member 16 is fixed to the connection base portion 5 in a post-mounting manner.

Subsequently, the molds 12A and 12B are separated at the parting line PL to open the mold 12, and the formed resin pipe 1 is taken out along with the waste portions of the cured resin R2. By cutting the waste portions of the cured resin R2 from the taken-out resin pipe 1, the resin pipe 1 illustrated in FIGS. 1 to 5 is manufactured.

As illustrated in FIG. 10, the temperature of the molten resin R1 injected into the cavity 13 is lowered upon contact with the surface of the cavity 13, and therefore, the molten resin R1 generally experiences a decrease in temperature (increase in viscosity) from the side near the surface of the cavity 13 toward the center of the transverse cross-section. When the viscosity of molten resin R1 filled in the cavity 13 is high, a higher injection pressure for the gas As is required to let the gas As pass from the other end portion 13b to the one end portion 13a of the cavity 13. However, the gas As passes through a relatively soft portion (portion having a low viscosity) of the molten resin R1, so that, with an excessively high injection pressure, the gas As locally passes through the molten resin R1 near the center of the transverse cross-section of the cavity 13. This results in an excessive wall thickness t of the pipe wall 2 in the resin pipe 1 manufactured. In order to maintain the wall thickness t of the pipe wall 2 within a desired range along the entire pipe length, the injection pressure of the gas As into the cavity 13 is appropriately set based on the predetermined inner diameter of the resin pipe 1 and the viscosity of the molten resin R1 within the cavity 13.

When the length of the resin pipe 1 (cavity 13) is long, a higher injection pressure is required to let the gas As pass from the other end portion 13b to the one end portion 13a of the cavity 13. Therefore, the injection pressure of the gas As into the cavity 13 is appropriately set based on the pipe length of the resin pipe 1. Thus, while considering the predetermined inner diameter and pipe length of the resin pipe 1, the viscosity of the molten resin R1 in the cavity 13 is controlled within the desired range, and the gas As is then injected into the cavity 13 at an injection pressure suitable for that specific viscosity range.

To control the viscosity of the molten resin R1 in the cavity 13 within the desired range, the temperature of the molten resin R1 is adjusted. To adjust the temperature of the molten resin R1, at least one of the temperature of the molten resin R1 injected into the cavity 13 and the temperature of the mold 12 (cavity 13) is adjusted. However, more preferably, the temperature of the molten resin R1 injected into the cavity 13 is adjusted while the temperature of the mold 12 (cavity 13) is adjusted.

The temperature of the molten resin R1 injected into the cavity 13 is limited to a certain extent depending on the resin type, from the perspective of melting temperature and burning of respective resins. The injection temperature of the molten resin R1 is generally set in a range of, for example, 150°C or more and 350°C or less. The temperature of the mold 12 (cavity 13) is also limited to some extent. The temperature of the mold 12 (cavity 13) is generally set in a range of, for example, 30°C or more and 120°C or less. Therefore, the injection temperature of the molten resin R1 and the temperature of the mold 12 (cavity 13) are appropriately determined within such ranges to control the viscosity of the molten resin R1 in the cavity 13 within the desired range. In other words, to achieve the appropriate viscosity of the molten resin R1 in the cavity 13, the temperature of the molten resin R1 injected into the cavity 13 and the temperature of the mold 12 (cavity 13) are controlled and set within the desired range.

The appropriate injection pressure of the gas As cannot be set uniformly and comprehensively, as it varies depending on factors such as the length and shape of the resin pipe 1 (cavity 13) and the viscosity of the molten resin R1 in the cavity 13. Therefore, to maintain the molten resin R1 within the desired range in the cavity 13, the temperature of the molten resin R1 injected into the cavity 13 and the temperature of the mold 12 (cavity 13) are controlled and set within the desired range as described above. Under the temperature condition set in this manner, test forming is performed with the injection pressure of the gas As varied to multiple levels to manufacture samples of the resin pipe 1. The average wall thickness Ta of the pipe wall 2 and the variation V in the wall thickness t of the pipe wall 2 over the entire pipe length for each sample of the resin pipe 1 manufactured by the respective test forming are determined. Then, the injection pressure adopted when the average wall thickness Ta is 1. 5 mm or more and 1. 75 mm or less and the variation V is 0. 25 mm or less may be set as the appropriate injection pressure of the gas As. In the mass production of the resin pipe 1, the temperature (viscosity) of the molten resin R1 is set to the condition set during the test forming, and the gas As is injected into the cavity 13 at the appropriate injection pressure set, whereby the resin pipe 1 is manufactured.

As in this embodiment, using a gas as the assist material As to form the resin pipe 1 allows for a smaller variation in the wall thickness t of the pipe wall 2 throughout the entire pipe length, even when the pipe is long, as compared with using a solid core as the assist material As. That is, during the course of the gas of the assist material As passing through the cavity 13 filled with the molten resin R1, a rapid temperature drop of the molten resin R1 upon contact with this gas can be avoided, compared with the case in which a solid assist material As is used. Unlike the case of the solid assist material, the molten resin R1 does not adhere to the assist material As when the assist material As is a gas.

Therefore, even when the molten resin R1 is provided to fill the cavity 13 having a long pipe length and bent portions 13c, letting the gas As pass through is advantageous for suppressing the variation of the wall thickness t of the formed pipe wall 2 between the region corresponding to the gas As injection outlet side (the other end portion 1b side) and the region corresponding to the outlet side (the one end portion 1a side). This embodiment is effective even when the length of the resin pipe 1 is 750 mm or more, or even 1000 mm or more, or 1500 mm or more, and is also advantageous for suppressing the variation of the wall thickness t of the pipe wall 2 at the bent portions 13c. As a result, the resin pipe 1 manufactured can achieve a smaller variation V in the wall thickness t of the pipe wall 2 as described above. Furthermore, since the gas is used as the assist material As, the resin pipe 1 can be manufactured relatively easily even when the pipe length is long and the shape is three-dimensionally bent.

### Example

Molten resin was injected by an injector from one end portion toward the other end portion of a cavity that bends and extends in the mold, and then, an assist material was injected from the other end portion toward the one end portion of the cavity, whereby a three-dimensionally bent resin pipe having a length of 1500 mm and an outer diameter of 7 mm over the entire pipe length was manufactured under the following conditions.

As the molten resin, a mixture of 100 parts by mass of nylon 6 resin and 30 parts by mass of glass fiber (short fiber) was used. The outer diameter of glass fiber was 0.001 mm or more and 0.05 mm or less, and the length was 0.01 mm or more and 0.1 mm or less.

Then, resin pipes were manufactured using 5 different assist material specifications (Example, Comparative Examples 1 to 4) as shown in Table 1. The injection temperature and injection speed of the molten resin, as well as the mold temperature, were kept the same. In Example, a nitrogen gas of a roomtemperature was used as the assist material, while a spherical core made of nylon 6 resin was used in Comparative Examples 1 to 4. In Comparative Examples 1 to 4, only the outer diameter of the assist material (core) was varied, while the injection pressure of the assist material was set to the same value. The injection pressure of the assist material (nitrogen gas) of Example was substantially the same as the injection pressure of the assist material (core) of Comparative Examples 1 to 4. Example and Comparative Examples 1 to 4 were substantially different only in the specifications of the assist material. The wall thickness t of each of the pipe walls of the resin pipes manufactured was measured according to the aforementioned definition to calculate the average wall thickness Ta of the pipe wall, and the variation V in the wall thickness t of the pipe wall over the entire pipe length was calculated according to the aforementioned definition. The results are shown in Table 1.

**[Table 1]**

| | Example | Comparative Example 1 | Comparative Example 2 | Comparative Example 3 | Comparative Example 4 |
|---|---|---|---|---|---|
| Material of assist material | Nitrogen gas | Resin core | | | |
| Outer diameter of assist material (mm) | - | 4.6 | 4.8 | 5.1 | 5.4 |
| Average wall thickness Ta of pipe wall (mm) | 1.63 | 1.8 | 1.6 | 1.3 | 1.2 |
| Variation in wall thickness V (mm) of pipe wall | 0.25 | 1.1 | 1.0 | 0.65 | 0.7 |

From the results of Table 1, it can be found that the variation V in the wall thickness of the pipe wall can be suppressed over the entire length of the pipe in the example.

### Reference Signs List

1 Bent resin pipe
1a One end portion
1b Other end portion
2 Pipe wall
3 Pipe passage
4 Bent portion
5 Connection base portion
5a Communication hole
6 Manufacturing device for bent resin pipe
7 Injector
8 Cylinder
8a Injection outlet
9 Screw
10 Assist material inflation device
11 Storage portion
11a Injection outlet
12 (12A, 12B) Mold
13 Cavity
13a One end portion
13b Other end portion
13c Bent portion
14a Injection path
14b Injection path
15 Forming portion
16 Metal member (inner ring)
PL Parting line
R1 Molten resin
R2 Cured resin
As Assist material (gas)
f Reinforcing fiber

## Claims

1. A method for manufacturing a bent resin pipe, comprising:
injecting a molten resin by an injector from one end portion toward the other end portion of a cavity that bends and extends in a mold;
injecting an assist material into the cavity and discharging an excess of the molten resin from the cavity; and
curing the molten resin having a cylindrical shape left in the cavity, thereby manufacturing the bent resin pipe,
the bent resin pipe having a pipe length of 350 mm or more, and
a gas being used as the assist material.

2. The method for manufacturing the bent resin pipe according to claim 1, wherein an injection pressure of the gas into the cavity is set based on a predetermined inner diameter of the bent resin pipe and a viscosity of the molten resin in the cavity.

3. The method for manufacturing the bent resin pipe according to claim 2, wherein the injection pressure is set further based on the pipe length.

4. The method for manufacturing a bent resin pipe according to claim 3 or 4, wherein the viscosity is controlled in a desired range by adjusting a temperature of the molten resin.

5. The method for manufacturing the bent resin pipe according to any one of claims 1 to 4, wherein
the bent resin pipe is configured to have a connection base portion for connecting an accessory device at a longitudinally intermediate position of the bent resin pipe, the connection base portion protruding outward from an outer pipe surface and having a communication hole communicating with a pipe passage, and
the cavity has a forming portion for forming the connection base portion provided adjacent to the cavity, thereby manufacturing the connection base portion integrally with the bent resin pipe by filling and curing the molten resin in the forming portion.

6. The method for manufacturing a bent resin pipe according to claim 5, wherein, in a state in which a metal member disposed in the forming portion, the metal member is internally fitted and fixed through the communication hole of the connection base portion by filling and curing the molten resin in the forming portion.

7. A bent resin pipe having a pipe length of 350 mm or more, comprising:
a connection base portion for connecting an accessory device at a longitudinally intermediate position of the bent resin pipe, the connection base portion protruding outward from an outer pipe surface and having a communication hole communicating with a pipe passage,
the bent resin pipe and the connection base portion being an integral body made of an identical resin,
an average wall thickness of a pipe wall of the bent resin pipe being 1. 5 mm or more and 1. 75 mm or less, and
a variation in wall thickness of the pipe wall over an entire pipe length being 0. 25 mm or less.
